# EUROPEAN PATENT APPLICATION

(11) **EP 4 797 640 A1**
(43) Date of publication of application: **26.08.2026**
(21) Application number: 26155049.5
(22) Date of filing: 29.01.2026
(51) Int. Cl.: H04L 41/0894, H04L 41/0806, H04L 41/5019, H04L 41/342, H04L 41/5006, H04L 41/08, H04L 41/122, H04L 41/5009

(54) **PLACEMENT OF AN INSTANCE OF AN EDGE APPLICATION FUNCTION**

(30) Priority: 19.02.2025 FI 20255149
(71) Applicant: Nokia Solutions and Networks Oy, 02610 Espoo (FI)
(72) Inventor: LIETO, Alessandro, Stuttgart (DE); WU, Huanzhuo, Munich (DE)
(74) Representative: Bryers Intellectual Property Ltd

(57) **Abstract**

Method, comprising
receiving a connection request to connect a user to an application, wherein, if the user is connected to the application, a plurality of users are connected to the application;
providing an orchestration request for an orchestration policy for the application and the plurality of users to an orchestration entity, wherein the orchestration request indicates that each user is or is to be connected to the application, the orchestration request comprises for each of the users a location of the respective user and a QoS requirement of the application;
receiving the orchestration policy from the orchestration entity, wherein the orchestration policy indicates one or more deployment locations to deploy the application such that the QoS requirement is sufficiently fulfilled;
deploying the application at one of the deployment locations;
informing the user or an application function of a network serving the user how to access the application.

## Description

### Technical Field

The present disclosure relates to placement of an instance of an edge application function.

### Abbreviations

- 3GPP:: 3rd Generation Partnership Project
- 4G/5G/6G:: 4^{th}/5^{th}/6^{th} Generation
- AF:: Application Function
- API:: Application Programming Interface
- CPU:: Central Processing Unit
- ETSI:: European Telecommunications Standards Institute
- ID:: Identity
- MEC:: Multi-Access Edge Computing
- NEF:: Network Exposure Function
- NWDAF:: Network Data Analytics Function
- PDU:: Packet Data Unit
- QoS:: Quality of Service
- RTC:: Real-time Communication
- TS:: Technical Specification
- UE:: User Equipment
- UPF:: User Plane Function
- VR:: Virtual Reality
- XR:: Extended Reality

### Background

As applications are evolving to provide more advanced services and experiences to end users, also communication networks need to extend their capabilities to support the wide range of applications, with their more demanding requirements and features.

Multi-Access Edge Computing (MEC) has been introduced to cope with demanding latency requirements of applications and to provide computation capabilities closer to the end users, at the edge of mobile networks. The advantages thereof comprise lower latency, as well as better traffic load management for network operators.

For the level of interaction between networks and applications, it is now considered to be beneficial to expose some of the capabilities and performance guarantees of the network to applications to optimize the level of experience of end users. Such exposure can either happen via dedicated interfaces (proprietary APIs) or through standardized interfaces, e.g., Network Exposure Function (NEF) or Network Data Analytics Function (NWDAF). Some relevant interfaces according to 3GPP are the following:
- Information about network performance information, which can be exposed by NEF
   ∘ User Plane Network Function (UPF) can expose user plane related information to the 5^{th} Generation (5G) core (defined in 3GPP TS 23.502 Clause 5.2.26.2), e.g., traffic volume, throughput, e2e delay.
   ∘ NWDAF can expose several analytic information (defined in 3GPP TS 23.288, Clause 7.1), e.g., expected User Equipment (UE) behavioral parameters, user data congestion information.
- Connection to edge cloud
   ∘ Three connectivity models to enable edge computing (defined in 3GPP TS 23.548, Clause 4.3): distributed anchor point, session breakout, multiple Packet Data Unit (PDU) session.
   ∘ Traffic to a certain edge application server via traffic influence (defined in 3GPP TS 23.502. Clause 4.3.6) or edge deployment information (defined in 3GPP TS 23.548, Clause 6.2.3.4).

### Summary

It is an object to improve the prior art.

According to a first aspect, there is provided an apparatus, comprising
means for receiving an orchestration request to provide a new orchestration policy for an instance of an application and a plurality of users, wherein the orchestration request indicates that each user of the plurality of users is connected to the instance of the application or is to be connected to the instance of the application, the orchestration request comprises for each of the users a location of the respective user, and each user of the plurality of users is served by a respective network of one or more networks;
means for collecting network related information from the one or more networks and collecting application related information from an owner of the application, wherein the network related information includes potential locations for deploying the instance of the application, and for each of the potential locations an indication of a quality of service available for the instance of the application at the respective potential location, and the application related information includes at least one of a quality of service requirement of the application to the users or a quality of service requirement of the application to the potential locations;
means for deriving the new orchestration policy based on the network related information and the application related information, wherein the new orchestration policy indicates one or more deployment locations among the potential locations such that a quality of service requirement of the application is sufficiently fulfilled for the plurality of users if the instance of the application is deployed at one of the one or more deployment locations;
means for providing the new orchestration policy in response to the orchestration request.

The potential locations may be edge cloud servers of the one or more networks.

At least one of the one or more networks may be a mobile network.

The means for deriving may be configured to derive the new orchestration policy such that, for each of the one or more deployment locations, the quality of service requirement of the application is fulfilled for each of the users if the instance of the application is deployed at the respective one of the one or more deployment locations.

The new orchestration policy may comprise, for at least one of the plurality of users, a quality of service requirement for a link between the respective user and the one or more deployment locations.

The new orchestration policy may comprise, for each of the users of the plurality of users, a quality of service requirement for a link between the respective user and the one or more deployment locations.

For the at least one of the plurality of users, the quality of service requirement may be related to at least one of a throughput, a latency, a bandwidth, a jitter, or a packet loss probability on the link between the respective user and the one or more deployment locations.

The orchestration request may indicate that a previous orchestration policy for the application and the plurality of users is to be updated to obtain the new orchestration policy because of at least one of a change of at least one of the one or more networks or a change of the application.

The orchestration request may comprise an indication of a current deployment location where the instance of the application is currently deployed, and the apparatus may further comprise
means for checking whether the current deployment location is the same as one of the one or more deployment locations indicated in the new orchestration policy;
means for inhibiting the means for providing the new orchestration policy from providing any of the deployment locations of the new orchestration policy different from the current deployment location if the current deployment location is the same as one of the one or more deployment locations indicated in the new orchestration policy; wherein
the means for providing may be configured to provide, for each of the users of the plurality of users, an application function of the network serving the respective user with the quality of service requirement for the link between the respective user and the current deployment location if the current deployment location is the same as one of the one or more deployment locations indicated in the new orchestration policy.

The apparatus may further comprise
means for inhibiting to provide, for each of the users of the plurality of users, the application function of the network serving respective user with the quality of service requirement for the link between the respective user and the deployment location if the deployment location indicated in the previous orchestration policy is not the same as the deployment location indicated in the new orchestration policy.

According to a second aspect, there is provided an apparatus, comprising
means for receiving a connection request to connect at least one user to an instance of an application, wherein, if the at least one user is connected to the instance of the application, a plurality of users are connected to the instance of the application, and each user of the plurality of users is served by a respective network of one or more networks;
means for providing an orchestration request for a new orchestration policy for the instance of the application and the plurality of users to an orchestration entity, wherein the orchestration request indicates that each user of the plurality of users is connected to the instance of the application or is to be connected to the instance of the application, the orchestration request comprises for each of the users a location of the respective user; and the orchestration request comprises a quality of service requirement of the application;
means for receiving the new orchestration policy from the orchestration entity in response to the orchestration request, wherein the new orchestration policy indicates one or more deployment locations to deploy the instance of the application such that the quality of service requirement of the application is sufficiently fulfilled for the plurality of users if the instance of the application is deployed at one of the one or more deployment locations;
means for deploying the instance of the application at one of the one or more deployment locations;
means for informing the at least one user or an application function of the network serving the at least one user how to access the instance of the application.

The apparatus may further comprise
means for comparing the new orchestration policy with a previous orchestration policy indicating a previous deployment location where the instance of the application is deployed before the at least one user was to be connected to the instance of the application;
means for informing an application function of one of the one or more networks how to access the instance of the application at the new deployment location if the new deployment location is different from the previous deployment location.

The new deployment location may be an edge cloud server of one of the one or more networks.

At least one of the one or more networks may be a mobile network.

The apparatus may further comprise
means for monitoring at least one of whether the application has changed or whether an information is received that at least one of the one or more networks has changed;
means for triggering the means for providing the orchestration request to provide the orchestration request if the at least one of that the application has changed or that the information is received that the at least one of the one or more networks has changed.

The new orchestration policy may comprise, for at least one user of the plurality of users, a quality of service requirement for a link between the respective user and the one or more deployment locations, and
the means for informing may be configured to inform, for each of the users, an application function of the network serving the respective user about the quality of service requirement for the link between the respective user and the one or more deployment locations.

The new orchestration policy may comprise, for each user of the plurality of users, a quality of service requirement for a link between the respective user and the one or more deployment locations.

For the at least one user of the plurality of users, the quality of service requirement for the link between the respective user and the deployment location may be related to at least one of a throughput, a latency, a bandwidth, a jitter, or a packet loss probability on the link between the respective user and the network serving the respective user.

According to a third aspect, there is provided an apparatus, comprising
means for monitoring whether a configuration of a network has changed, wherein an instance of an application is deployed on an edge cloud server of the network;
means for informing an owner of the application that the configuration of the network has changed if the configuration of the network has changed.

According to a fourth aspect, there is provided an apparatus, comprising
means for receiving a quality of service requirement for a link between a user and a deployment location for an instance of an application;
means for forwarding the quality of service requirement to the user.

According to a fifth aspect, there is provided an apparatus, comprising
means for receiving a quality of service requirement for a link between a user and a deployment location for an instance of an application;
means for modifying a PDU session between the user and the instance of the application based on the received quality of service requirement.

According to a sixth aspect, there is provided an method, comprising
receiving an orchestration request to provide a new orchestration policy for an instance of an application and a plurality of users, wherein the orchestration request indicates that each user of the plurality of users is connected to the instance of the application or is to be connected to the instance of the application, the orchestration request comprises for each of the users a location of the respective user, and each user of the plurality of users is served by a respective network of one or more networks;
collecting network related information from the one or more networks and collecting application related information from an owner of the application, wherein the network related information includes potential locations for deploying the instance of the application, and for each of the potential locations an indication of a quality of service available for the instance of the application at the respective potential location, and the application related information includes at least one of a quality of service requirement of the application to the users or a quality of service requirement of the application to the potential locations;
deriving the new orchestration policy based on the network related information and the application related information, wherein the new orchestration policy indicates one or more deployment locations among the potential locations such that a quality of service requirement of the application is sufficiently fulfilled for the plurality of users if the instance of the application is deployed at one of the one or more deployment locations;
providing the new orchestration policy in response to the orchestration request.

The potential locations may be edge cloud servers of the one or more networks.

At least one of the one or more networks may be a mobile network.

The new orchestration policy may be derived such that, for each of the one or more deployment locations, the quality of service requirement of the application is fulfilled for each of the users if the instance of the application is deployed at the respective one of the one or more deployment locations.

The new orchestration policy may comprise, for at least one of the plurality of users, a quality of service requirement for a link between the respective user and the one or more deployment locations.

The new orchestration policy may comprise, for each of the users of the plurality of users, a quality of service requirement for a link between the respective user and the one or more deployment locations.

For the at least one of the plurality of users, the quality of service requirement may be related to at least one of a throughput, a latency, a bandwidth, a jitter, or a packet loss probability on the link between the respective user and the one or more deployment locations.

The orchestration request may indicate that a previous orchestration policy for the application and the plurality of users is to be updated to obtain the new orchestration policy because of at least one of a change of at least one of the one or more networks or a change of the application.

The orchestration request may comprise an indication of a current deployment location where the instance of the application is currently deployed, and the method may further comprise
checking whether the current deployment location is the same as one of the one or more deployment locations indicated in the new orchestration policy;
inhibiting the providing any of the deployment locations of the new orchestration policy different from the current deployment location if the current deployment location is the same as one of the one or more deployment locations indicated in the new orchestration policy; wherein,
for each of the users of the plurality of users, an application function of the network serving the respective user may be provided with the quality of service requirement for the link between the respective user and the current deployment location if the current deployment location is the same as one of the one or more deployment locations indicated in the new orchestration policy.

The method may further comprise
inhibiting to provide, for each of the users of the plurality of users, the application function of the network serving respective user with the quality of service requirement for the link between the respective user and the deployment location if the deployment location indicated in the previous orchestration policy is not the same as the deployment location indicated in the new orchestration policy.

According to a seventh aspect, there is provided an method, comprising
receiving a connection request to connect at least one user to an instance of an application, wherein, if the at least one user is connected to the instance of the application, a plurality of users are connected to the instance of the application, and each user of the plurality of users is served by a respective network of one or more networks;
providing an orchestration request for a new orchestration policy for the instance of the application and the plurality of users to an orchestration entity, wherein the orchestration request indicates that each user of the plurality of users is connected to the instance of the application or is to be connected to the instance of the application, the orchestration request comprises for each of the users a location of the respective user; and the orchestration request comprises a quality of service requirement of the application;
receiving the new orchestration policy from the orchestration entity in response to the orchestration request, wherein the new orchestration policy indicates one or more deployment locations to deploy the instance of the application such that the quality of service requirement of the application is sufficiently fulfilled for the plurality of users if the instance of the application is deployed at one of the one or more deployment locations;
deploying the instance of the application at one of the one or more deployment locations;
informing the at least one user or an application function of the network serving the at least one user how to access the instance of the application.

The method may further comprise
comparing the new orchestration policy with a previous orchestration policy indicating a previous deployment location where the instance of the application is deployed before the at least one user was to be connected to the instance of the application;
informing an application function of one of the one or more networks how to access the instance of the application at the new deployment location if the new deployment location is different from the previous deployment location.

The new deployment location may be an edge cloud server of one of the one or more networks.

At least one of the one or more networks may be a mobile network.

The method may further comprise
monitoring at least one of whether the application has changed or whether an information is received that at least one of the one or more networks has changed;
triggering to provide the orchestration request if the at least one of that the application has changed or that the information is received that the at least one of the one or more networks has changed.

The new orchestration policy may comprise, for at least one user of the plurality of users, a quality of service requirement for a link between the respective user and the one or more deployment locations, and,
for each of the users, an application function of the network serving the respective user may be informed about the quality of service requirement for the link between the respective user and the one or more deployment locations.

The new orchestration policy may comprise, for each user of the plurality of users, a quality of service requirement for a link between the respective user and the one or more deployment locations.

For the at least one user of the plurality of users, the quality of service requirement for the link between the respective user and the deployment location may be related to at least one of a throughput, a latency, a bandwidth, a jitter, or a packet loss probability on the link between the respective user and the network serving the respective user.

According to an eighth aspect, there is provided a method, comprising
monitoring whether a configuration of a network has changed, wherein an instance of an application is deployed on an edge cloud server of the network;
informing an owner of the application that the configuration of the network has changed if the configuration of the network has changed.

According to a ninth aspect, there is provided a method, comprising
receiving a quality of service requirement for a link between a user and a deployment location for an instance of an application;
forwarding the quality of service requirement to the user.

According to a tenth aspect, there is provided a method, comprising
receiving a quality of service requirement for a link between a user and a deployment location for an instance of an application;
modifying a PDU session between the user and the instance of the application based on the received quality of service requirement.

Each of the methods of the sixth to tenth aspects may be a method of to placing an instance of an edge application function.

According to an eleventh aspect, there is provided a computer program product comprising a set of instructions which, when executed on an apparatus, is configured to cause the apparatus to carry out the method according to any of the sixth to tenth aspects. The computer program product may be embodied as a computer-readable medium or directly loadable into a computer.

According to some example embodiments, at least one of the following advantages may be achieved:
- a stable solution is provide to place multi-user applications on edge cloud servers;
- the solution may be optimal;
- ping-pong effects may be avoided;
- existing interfaces may be exploited.

### Brief description of the drawings

Further details, features, objects, and advantages are apparent from the following detailed description of example embodiments which is to be taken in conjunction with the appended drawings, wherein:
Fig. 1 shows an example of a use case of a multi-users application;
Fig. 2 shows an example of latency optimization in case of two users of a multi-users application;
Fig. 3 shows an example of latency optimization in case of three users of a multi-users application;
Fig. 4 shows a message flow according to Example embodiment 1;
Fig. 5 shows a message flow according to Example embodiment 2;
Fig. 6 shows an apparatus according to an example embodiment;
Fig. 7 shows a method according to an example embodiment;
Fig. 8 shows an apparatus according to an example embodiment;
Fig. 9 shows a method according to an example embodiment;
Fig. 10 shows an apparatus according to an example embodiment;
Fig. 11 shows a method according to an example embodiment;
Fig. 12 shows an apparatus according to an example embodiment;
Fig. 13 shows a method according to an example embodiment;
Fig. 14 shows an apparatus according to an example embodiment;
Fig. 15 shows a method according to an example embodiment; and
Fig. 16 shows an apparatus according to an example embodiment.

### Detailed description of certain example embodiments

Herein below, certain example embodiments are described in detail with reference to the accompanying drawings, wherein the features of the example embodiments can be freely combined with each other unless otherwise described. However, it is to be expressly understood that the description of certain example embodiments is given by way of example only, and that it is by no way intended to be understood as limiting the disclosure to the disclosed details.

Moreover, it is to be understood that the apparatus is configured to perform the corresponding method, although in some cases only the apparatus or only the method are described.

It is a complex problem to decide where on plural edge cloud servers to optimally allocate an instance of an application, considering the different degrees of freedom that need to be accounted for: position of users and edge servers, technical limitation of network connectivity and computing resources. There may be multiple decision makers that have to coordinate their actions.

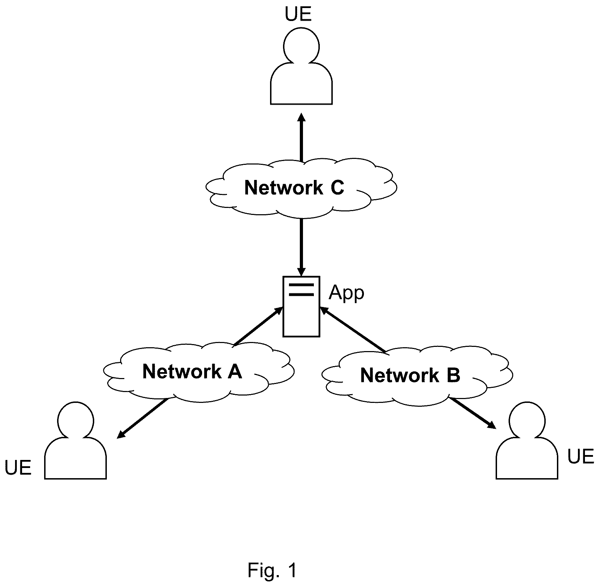

The above described solutions do not provide individually a valid solution. In fact, there are many use cases where multiple users jointly interact and cooperate to a common task or application session, noted as multi-user application. In such cases, when the users are uniformly distributed among one or more networks, the problem of how to select edge servers become complex and difficult to be solved, given that decisions are typically taken individually by different actors involved (i.e., application owners, edge cloud providers, network operators). In Fig. 1, it is sketched an example of a multi-user application sharing the same edge cloud resources. Namely, a plurality of users (in the example of Fig. 1: three users) being served by a plurality of networks (in the example of Fig. 1: three different networks A, B, and C) share a same application. Such a scenario is applicable to many applications, such as online cloud gaming, Extended Reality (XR)/Virtual Reality (VR) rendering and experience, metaverse, and others.

Some example embodiments provide method to solve such multi-user application scenarios. They solve the problem of edge cloud resource placement where multiple decision makers can impact the performance of each other. In particular, they provide a cooperation mechanism to avoid ping-pong effects that might occur if multiple iterative individual actions do not converge to a stable and optimal solution.

Interworking between network and application usually considers one-to-one interactions between a single network and an individual application. Therefore, to handle multi-user applications (i.e., many users connected to different networks and accessing the same application as explained above), those methods would require multiple independent steps between the application and each network involved. Those approaches cannot guarantee that the overall performance requirement for the group of users is met and maintained, since the individual interactions between each network and the application might cause actions that might affect others. In some cases, the different individual interactions may generate ping-pong effects that never converge to a stable solution.

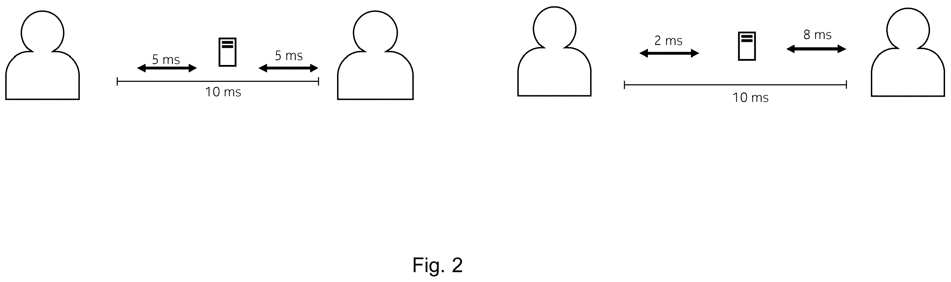

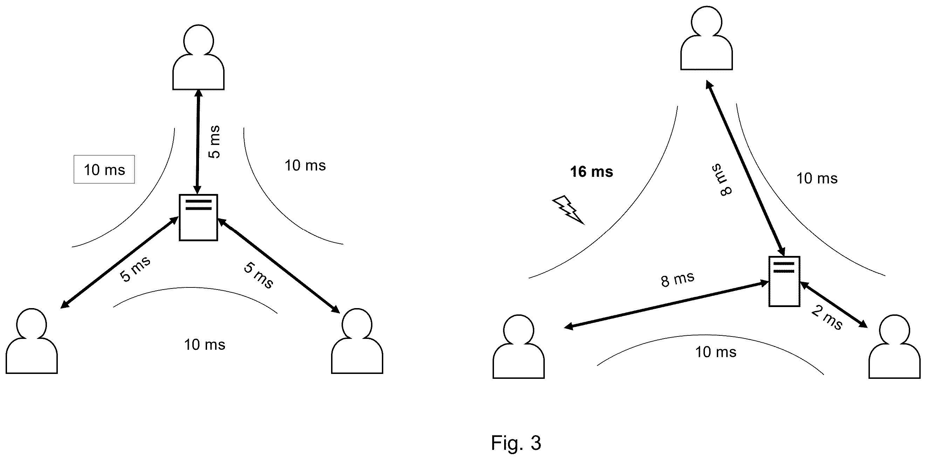

Figs. 2 and 3 illustrate an example of such a situation. The left part and the right part show two potential configurations in case the application is shared by two users. If one assumes that the E2E latency requirement between two users is a latency of less than 10 ms, the two configurations in Fig. 2 individually respect the constraints. For example, the right configuration may be a result of some optimization taking into account the E2E performance requirement between the two users. However, in a multi-user application scenario with more than two users as shown in Fig. 3, the E2E latency requirement is fulfilled for all the users of the user group in the configuration on the left, while it is not fulfilled for the left user and upper user in the configuration on the right in Fig. 3.

This example is very relevant for edge cloud resources placement and QoS of the connection between UE and the application, where the configuration on the right in Fig. 3 satisfies the user group requirements, while the configuration on the left only satisfies the requirements of a subgroup of those users.

Some example embodiments address the following questions, in particular for a multi-user application scenario:
1. What information is needed by each entity (i.e., network, user, application) to optimize or guarantee the (multi-user) application performance?
2. How to derive the information by which entity?
3. How to use the derived information by the networks and the application owner? While these questions are particularly relevant for a multi-user application scenario, some example embodiments may be applied to a multi-user application with a single user or even to a single user application.

Some example embodiments provide a method to orchestrate (by an orchestration entity) the interaction of (potentially multiple) users connecting to an instance of an application. The users may connect to the instance of the application via a same network or via different networks. The orchestration entity may access the application for information (e.g., address, port number, application ID) and the QoS of each connection to guarantee the overall performance in a multi-user application scenario.

Some features of the method according to some example embodiments are listed below:
1. An orchestration entity derives orchestration policy/polices. The orchestration entity is on top of the network(s), e.g., co-located with the application owner, on a third-party server, or an 3GPP Application Function (AF) communicating with all involved core networks.
2. A new user (group) from a certain network may request the orchestration, via the application owner to the orchestration entity, in order to obtain an orchestration policy to initiate a new multi-user application usage or to join an existing multi-user application usage (described at greater detail in Example embodiment 1 further below; Example embodiment 1 may have UE impact). In another scenario, one or more networks (due to network changes) or the application owner (due to application (server) changes) may request the orchestration to the orchestration entity, in order to update the orchestration policy (described at greater detail in Example embodiment 2 further below; Example embodiment 2 may have UE impact).
3. The orchestration entity may collect information from network(s)- side and application-side by reusing the existing network services provided by 3GPP, e.g., NEF, NWDAF, reusing MEC API (for example, as defined by European Telecommunications Standards Institute (ESTI)), or one or more proprietary APIs.

The information from the network side may include one or more of (but not limited to):
- resource constraints, like
   ∘ minimum/maximum available bandwidth,
   ∘ maximum number of connected UEs,
- real-time capabilities and guarantees, like
   ∘ minimum/maximum supported latency,
   ∘ minimum/maximum throughput.

This information can be expressed either in the range of minimum and maximum, or statistically provided by means of average and standard deviation measurements.

From the application side, the information collected can include one or more of (but not limited to):
- computing resource requirements,
- network measurement requirements, like latency, packet loss, etc.,
- resource constraints, e.g., computing capabilities of the edge servers,
- N6 latency requirements to the candidate edge cloud servers,
- routing information.

E.g., for the placement of edge cloud resources in case of a cloud gaming application, it might be required from application side a minimum amount, M, of available Central Processing Units (CPUs) or the edge servers maximum capacity, C, and memory units, N, while the network should guarantee latency requirements for both uplink and downlink communications, ${y}_{lat}^{ul}$ and ${y}_{lat}^{dl}$, and minimum throughput for the downlink direction only, ${x}_{thr}^{dl}$.

4. The orchestration policy/policies is/are derived by the orchestration entity by using the collected information. The orchestration policy may be computed based on the constraints received from network and application, e.g., a feasible solution for edge server locations that can guarantee the latency within the specified target and/or computation resources below the maximum available capacity.

The orchestration policy may include
- one or several selected edge cloud server(s) to host the instance of the application for the application owner
   ∘ One example could be the list of feasible edge cloud servers that can satisfy the constraints, or a list of candidate servers ordered based on a metric. The metric can be expressed as the probability of a specific candidate edge server to meet the network and application requirements, e.g., $m = Pr \left(Y<{y}_{lat}^{ul}\right)$*.*
- determined/updated QoS requirements of UE's connectivity to the selected edge cloud server for UEs.

5. With the derived orchestration policy,
- the application owner deploys/migrates the instance of the application on the selected edge cloud server(s) and provides application access information of the edge cloud server(s) hosting the instance of the application to UEs or/and the network;
- each UE requests PDU session establishment in Embodiment 1, each network initiates traffic influence/edge application server deployment information updating or impacted UP requests PDU session modification in Embodiment 2 based on the received access information and QoS.

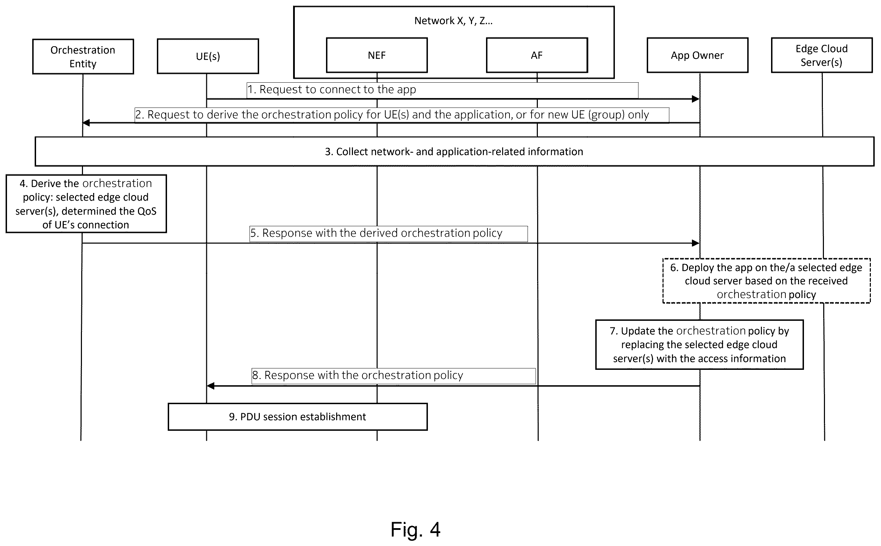

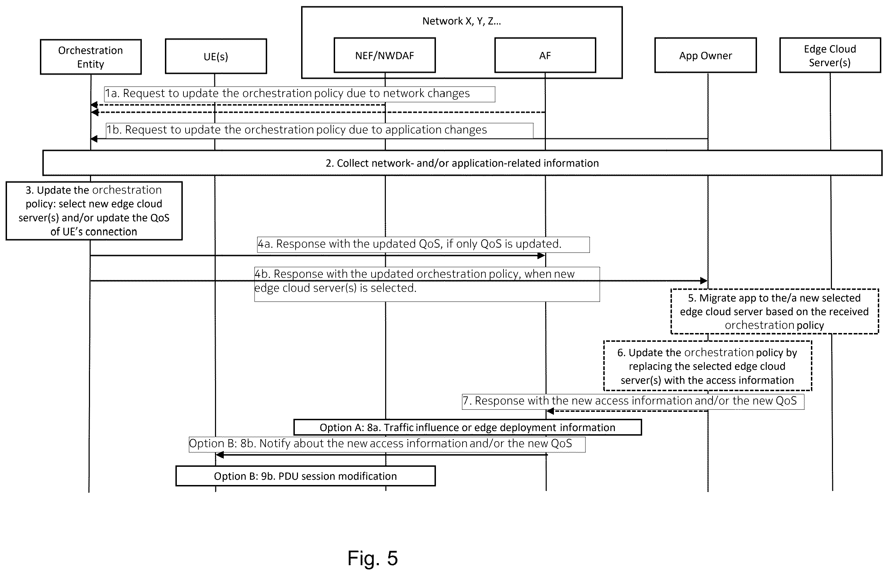

Hereinafter, call flows according to some example embodiments are described with reference to Figs. 4 and 5. A new user or a new user group will be denoted as UE(s) in the call flows. One case covered by the Example embodiment 1 is that a network is not able to support the determined QoS requirements. Hence, the orchestration entity determines initial QoS requirements. If the initial QoS is not supported by a network, the network may request the update of the orchestration policy, as explained with respect to the Example Embodiment 2.

### Example Embodiment 1: Initiating the orchestration for a new user in a multi-user application (Fig. 4)

This example embodiment encompasses two distinct scenarios:
(1) the new user is the first to initiate the use of the multi-user application, implying that the instance of the application has not yet been hosted or interacted with any UE within the same instance of the multi-user application;
(2) the new user joins an ongoing instance of the multi-user application, indicating that the instance of the multi-user application is already hosted and has been interacting with other associated UEs within the same multi-user application. Fig. 4 shows a call flow to initiate the orchestration, when a new (group of) user(s) joins the multi-user application. The call flow of Fig. 4 is as follows:
   - Action 1: The UE(s) requests to connect to the multi-user application towards the application owner.
   - Action 2: With the information of the UE (in particular: UE location information), the application owner requests (by an orchestration request) the orchestration entity to provide an orchestration policy. If the application has not been hosted or interacted yet with any UE(s) in the same instance of the multi-user application, this request will be a request of deriving the orchestration policy for the UE(s) and the application, which will be used in Action 6 for application deployment and in Action 8 for UE PDU session establishment. If an instance of the application is already hosted and has been interacting with other related UE(s) in the same instance of the multi-user application, this request will be a request of deriving the orchestration policy for the new UE(s) only, which will be used only in Action 8 for UE PDU session establishment. In this case, in some example embodiments, the request for the orchestration policy may comprise an indication of the edge cloud server where the instance of the multi-user application is hosted.
   - Action 3: The orchestration entity collects the network- and application-related information. Depending on the implementation, the information collection can be, e.g., UE measures metrics (e.g., latency, bandwidth, etc.) towards all (or a subset of) candidate edge cloud servers; measurement entity (e.g., Web RTC) measures metrics between UE and the candidate edge cloud servers; or the orchestration entity as AF requests UPFs or NEFs of each network X, Y, Z for metrics measurement.
   - Action 4: Based on the collected information, the orchestration entity derives one or several orchestration policy/policies. The orchestration policy may contain one or several selected edge cloud server(s) (deployment locations) and the determined QoS requirements of the UE's connection. If the received orchestration request is for deriving the orchestration policy for the new UE(s) only, in some example embodiments, the orchestration entity may only determine the QoS requirements of the UEs' connections, new edge cloud server(s) may not have to be selected. However, in some example embodiments, even if the received orchestration request is for deriving the orchestration policy for the new UE(s) only, the orchestration entity may determine both new edge clod server(s) and QoS requirements of the UEs' connections. In some example embodiments, the orchestration request may comprise an indication whether the orchestration entity should derive only QoS requirements or new deployment locations and QoS requirements.
   - Action 5: The orchestration entity responds to the application owner with the derived orchestration policy/policies.
   - Action 6: The application owner choses only one among the (possible multiple) received orchestration policies (e.g. based on a local configuration of the application owner), and deploys the instance of the application on the selected edge cloud server based on the selected orchestration policy. If there are several selected edge cloud servers in the orchestration policy, the application owner selects one of the edge cloud servers (e.g. based on its local configuration), or deploys the instance of the application distributed on several edge cloud servers (e.g. based on its local configuration). Local configuration of the application is implementation specific, e.g., could be one that minimizes costs of deployment or one that has less privacy concerns. Note that, if the received request is deriving the orchestration policy for the UE(s) only and no new edge cloud server(s) is selected in the received orchestration policy/policies, the Action 6 can be skipped.
   - Action 7: After the successful deployment, the application owner updates the orchestration policy by replacing the selected edge cloud server(s) with the access information of the deployed instance of the application, e.g., address, port number, application ID. Note that, if the Action 6 is skipped, the application owner adds (instead of replacing) the access information of the deployed instance of the application in the orchestration policy.
   - Action 8: The application owner responds to the new UE (group) with the orchestration policy, including the access information of the deployed instance of the application and the QoS requirements of the connections towards the instance of the application.
   - Action 9: The new UE (group) starts PDU session establishment towards the received application access information with the received QoS requirements.

### Example Embodiment 2: Updating the orchestration in an ongoing multi-user application (Fig. 5)

Fig. 5**Error! Reference source not found.** shows a call flow to update the orchestration, when there is already a (group of) user(s) involving in an ongoing instance of the multi-user application. The call flow in Fig. 5 is as follows:
- Action 1: The network of an existing UE (group) or the application owner requests to update the orchestration policy (orchestration request). One option could be Action 1a that a network function of one network (e.g., NEF, NWDAF, or AF) triggers the request due to network resource limits, UE mobility, etc. Another option could be Action 1b that the application owner triggers the request due to changes on the application side, e.g., server overload.
   In some example embodiments, the orchestration request may comprise the current deployment location. The application owner knows the current deployment anyway. Also, the network knows the current deployment location because the location address is part of the PDU session information.
- Action 2: With the received request, the orchestration entity collects the network- and application-related information. Depending on the implementation, the information collection can be, e.g., UE measures metrics (e.g., latency, bandwidth, etc.) towards all (or a subset of) candidate edge cloud servers; measurement entity (e.g., Web RTC) measures metrics between UE and the candidate edge cloud servers; or the orchestration entity as AF requests UPFs or NEFs of each network X, Y, Z for metrics measurement.
- Action 3: Based on the collected information, the orchestration entity updates one or several orchestration policy/policies. The updates can be, e.g., selecting new edge cloud server(s) and/or the updating QoS requirements of the UE's connection. If the orchestration request comprises an indication of the current deployment location and the derived orchestration policy comprises the current deployment location as a potential new deployment location, the orchestration entity in some example embodiments may decide that the deployment location is maintained and only QoS requirements are updated.
- Action 4a: If only the QoS requirements are updated (because the orchestration request indicates so or because the new deployment location is the same as the current deployment location), in some example embodiments the orchestration entity responds to the AF of the network with the updated QoS and Action 4b and Actions 5, 6, and 7 will be skipped. Otherwise, Action 4a is skipped and Action 4b will be executed.
- Action 4b: The orchestration entity responds to the application owner with the new orchestration policy.
- Action 5: Based on the received new orchestration policy, the application owner migrates the instance of the application to the new selected edge cloud server, if any. If there are several selected edge cloud servers in the orchestration policy, the application owner selects one of the edge cloud servers based on its local configuration, or deploys the instance of the application distributed on several edge cloud servers based on its local configuration.
- Action 6: After the successful migration, the application owner updates the orchestration policy by replacing the new edge cloud server(s) with the access information of the migrated instance of the application, e.g., address, port number, application ID.
- Action 7: The application owner responds to the AF of all UEs' networks with the new orchestration policy, including the access information of the migrated instance of the application and/or the new QoS requirements of the connections towards the application.

There are two options of realizing the updated orchestration policy. They are denoted in Action 8a as option A or in Action 8b and 9b as Option B.
- Action 8a: The AF can perform Traffic Influence (defined in 3GPP TS 23.502, clause 4.3.6) or update edge application server Deployment Information (defined in 3GPP TS 23.548, clause 6.2.3.4) to redirect UEs' traffic to the migrated instance of the application with the (new) QoS support. The call flow ends.
- Action 8b: The AF notifies the updated orchestration policy to the related UE (group).
- Action 9b: The related UE (group) starts PDU session modification towards the updated application access information with the (new) QoS requirements. The call flow ends.

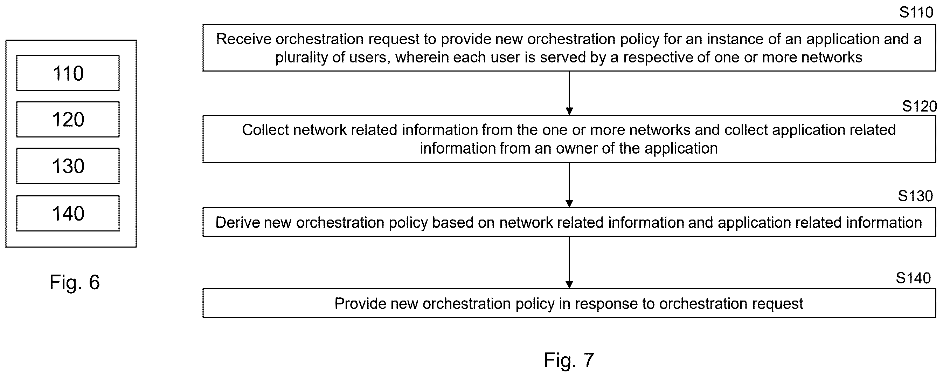

Fig. 6 shows an apparatus according to an example embodiment. The apparatus may be an orchestration entity or an element thereof. Fig. 7 shows a method according to an example embodiment. The apparatus according to Fig. 6 may perform the method of Fig. 7 but is not limited to this method. The method of Fig. 7 may be performed by the apparatus of Fig. 6 but is not limited to being performed by this apparatus.

The apparatus comprises means for receiving 110, means for collecting 120, means for deriving 130, and means for providing 140. The means for receiving 110, means for collecting 120, means for deriving 130, and means for providing 140 may be a receiving means, collecting means, deriving means, and providing means, respectively. The means for receiving 110, means for collecting 120, means for deriving 130 and means for providing 140 may be a receiver, collector, deriver, and provider, respectively. The means for receiving 110, means for collecting 120, means for deriving 130 and means for providing 140 may be a receiving processor, collecting processor, deriving processor, and providing processor, respectively.

The means for receiving 110 receives an orchestration request to provide a new orchestration policy for an instance of an application and a plurality of users (S110). The orchestration request indicates that each user of the plurality of users is connected to the instance of the application or is to be connected to the instance of the application. The orchestration request comprises for each of the users a location of the respective user. Each user of the plurality of users is served by a respective network of one or more networks.

The means for collecting 120 collects network related information from the one or more networks and collects application related information from an owner of the application (S120). The network related information includes potential locations for deploying the instance of the application, and for each of the potential locations an indication of a QoS available for the instance of the application at the respective potential location. The application related information includes at least one of a QoS requirement of the application to the users or a QoS requirement of the application to the potential locations.

The means for deriving 130 derives the new orchestration policy based on the network related information and the application related information (S130). The new orchestration policy indicates one or more deployment locations among the potential locations such that a QoS requirement of the application is sufficiently fulfilled for the plurality of users if the instance of the application is deployed at one of the one or more deployment locations.

The means for providing 140 provides the new orchestration policy in response to the orchestration request (S140).

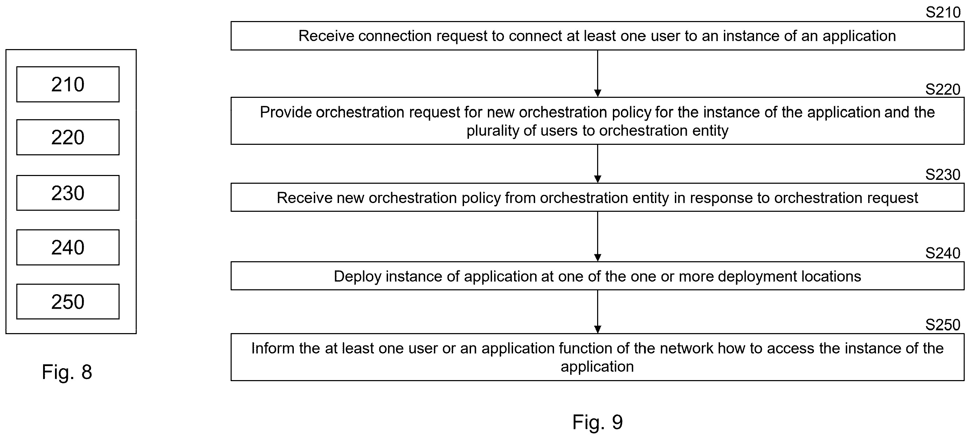

Fig. 8 shows an apparatus according to an example embodiment. The apparatus may be an application owner or an element thereof. Fig. 9 shows a method according to an example embodiment. The apparatus according to Fig. 8 may perform the method of Fig. 9 but is not limited to this method. The method of Fig. 9 may be performed by the apparatus of Fig. 8 but is not limited to being performed by this apparatus.

The apparatus comprises first means for receiving 210, means for providing 220, second means for receiving 230, means for deploying 240, and means for informing 250. The first means for receiving 210, means for providing 220, second means for receiving 230, means for deploying 240, and means for informing 250 may be a first receiving means, providing means, second receiving means, deploying means, and informing means, respectively. The first means for receiving 210, means for providing 220, second means for receiving 230, means for deploying 240, and means for informing 250 may be a first receiver, provider, second receiver, deployer, and informer, respectively. The first means for receiving 210, means for providing 220, second means for receiving 230, means for deploying 240, and means for informing 250 may be a first receiving processor, providing processor, second receiving processor, deploying processor, and informing processor, respectively.

The first means for receiving 210 receives a connection request to connect at least one user to an instance of an application (S210). If the at least one user is connected to the instance of the application, a plurality of users are connected to the instance of the application. Each user of the plurality of users is served by a respective network of one or more networks.

The means for providing 220 provides an orchestration request for a new orchestration policy for the instance of the application and the plurality of users to an orchestration entity (S220). The orchestration request indicates that each user of the plurality of users is connected to the instance of the application or is to be connected to the instance of the application. The orchestration request comprises for each of the users a location of the respective user. The orchestration request comprises a QoS requirement of the application.

The second means for receiving 230 receives the new orchestration policy from the orchestration entity in response to the orchestration request (S230). The new orchestration policy indicates one or more deployment locations to deploy the instance of the application. The indicated one or more deployment locations are such that the QoS requirement of the application is sufficiently fulfilled for the plurality of users if the instance of the application is deployed at one of the one or more deployment locations.

The means for deploying 240 deploys the instance of the application at one of the one or more deployment locations (S240).

The means for informing 250 informs the at least one user or an application function of the network serving the at least one user how to access the instance of the application (S250).

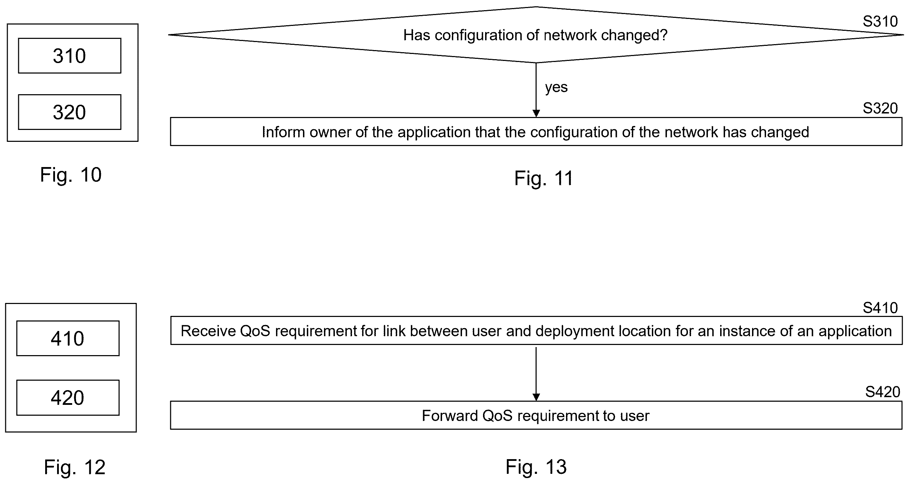

Fig. 10 shows an apparatus according to an example embodiment. The apparatus may be a network (represented by a AF, NEF or SMF, for example) or an element thereof. Fig. 11 shows a method according to an example embodiment. The apparatus according to Fig. 10 may perform the method of Fig. 11 but is not limited to this method. The method of Fig. 11 may be performed by the apparatus of Fig. 10 but is not limited to being performed by this apparatus.

The apparatus comprises means for monitoring 310 and means for informing 320. The means for monitoring 310 and means for informing 320 may be a monitoring means and informing means, respectively. The means for monitoring 310 and means for informing 320 may be a monitor and an informer, respectively. The means for monitoring 310 and means for informing 320 may be a monitoring processor and informing processor, respectively.

The means for monitoring 310 monitors whether a configuration of a network has changed (S310). An instance of an application is deployed on an edge cloud server of the network.

If the configuration of the network has changed (S310 = yes), the means for informing 320 informs an owner of the application that the configuration of the network has changed (S320).

Fig. 12 shows an apparatus according to an example embodiment. The apparatus may be an application function or an element thereof. Fig. 13 shows a method according to an example embodiment. The apparatus according to Fig. 12 may perform the method of Fig. 13 but is not limited to this method. The method of Fig. 13 may be performed by the apparatus of Fig. 12 but is not limited to being performed by this apparatus.

The apparatus comprises means for receiving 410 and means for forwarding 420. The means for receiving 410 and means for forwarding 420 may be a receiving means and forwarding means, respectively. The means for receiving 410 and means for forwarding 420 may be a receiver and a forwarder, respectively. The means for receiving 410 and means for forwarding 420 may be a receiving processor and forwarding processor, respectively.

The means for receiving 410 receives a QoS requirement for a link between a user and a deployment location for an instance of an application (S410). The means for forwarding 420 forwards the QoS requirement to the user (S420).

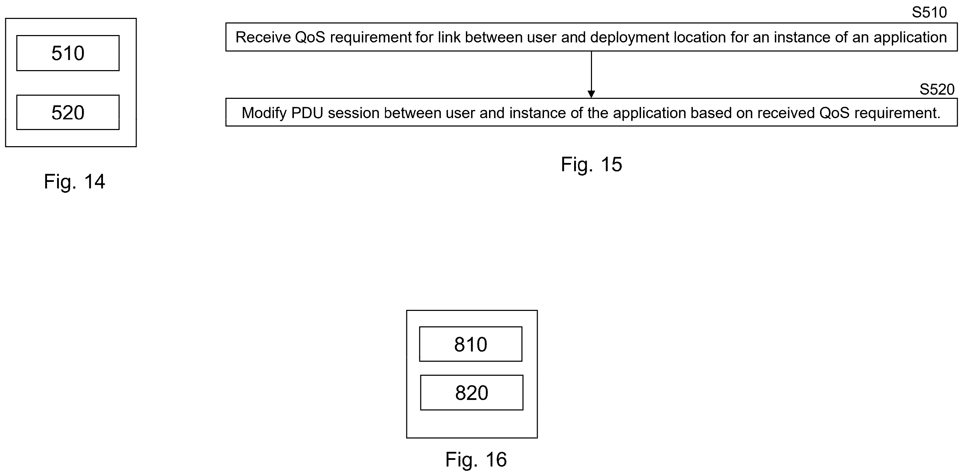

Fig. 14 shows an apparatus according to an example embodiment. The apparatus may be a terminal (such as a UE) or an element thereof. Fig. 15 shows a method according to an example embodiment. The apparatus according to Fig. 14 may perform the method of Fig. 15 but is not limited to this method. The method of Fig. 15 may be performed by the apparatus of Fig. 14 but is not limited to being performed by this apparatus.

The apparatus comprises means for receiving 510 and means for modifying 520. The means for receiving 510 and means for modifying 520 may be a receiving means and modifying means, respectively. The means for receiving 510 and means for modifying 520 may be a receiver and a modifier, respectively. The means for receiving 510 and means for modifying 520 may be a receiving processor and modifying processor, respectively.

The means for receiving 510 receives a QoS requirement for a link between a user and a deployment location for an instance of an application (S510). The means for modifying 520 modifies a PDU session between the user and the instance of the application based on the received QoS requirement (S520).

Fig. 16 shows an apparatus according to an example embodiment. The apparatus comprises at least one processor 810, at least one memory 820 storing instructions that, when executed by the at least one processor 810, cause the apparatus at least to perform at least one of the methods according to at least one of Figs. 7 or 9 or 11 or 13 or 15 and related description.

Example embodiments may be applied to mobile communication networks, such as 3GPP networks of any generation (4G, 5G, 6G, 7G, for example).

In example embodiments, each of the communications between the different entities may be performed in a secure way, e.g. by tunneling and/or encrypting etc..

One piece of information may be transmitted in one or plural messages from one entity to another entity. Each of these messages may comprise further (different) pieces of information.

Names of network elements, network functions, protocols, and methods are based on current standards, or are current proposals. These names are not limiting. For example, in other versions or other technologies, the names of corresponding entities may be different or the same as in the present description.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be deployed in the cloud.

According to the above description, it should thus be apparent that example embodiments provide, for example, an orchestration entity or an element thereof, an apparatus embodying the same, a method for controlling and/or operating the same, and computer program(s) controlling and/or operating the same as well as mediums carrying such computer program(s) and forming computer program product(s). According to the above description, it should thus be apparent that example embodiments provide, for example, an application owner or an element thereof, an apparatus embodying the same, a method for controlling and/or operating the same, and computer program(s) controlling and/or operating the same as well as mediums carrying such computer program(s) and forming computer program product(s). According to the above description, it should thus be apparent that example embodiments provide, for example, a network or an element thereof, an apparatus embodying the same, a method for controlling and/or operating the same, and computer program(s) controlling and/or operating the same as well as mediums carrying such computer program(s) and forming computer program product(s). According to the above description, it should thus be apparent that example embodiments provide, for example, an application function or an element thereof, an apparatus embodying the same, a method for controlling and/or operating the same, and computer program(s) controlling and/or operating the same as well as mediums carrying such computer program(s) and forming computer program product(s). According to the above description, it should thus be apparent that example embodiments provide, for example, a terminal (such as a UE) or an element thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Each of the entities described in the present description may be embodied in the cloud.

It should be noted that the description of the embodiments is given by way of example only and that various modifications may be made without departing from the scope of the disclosure as defined by the appended claims.

The terms "first X" and "second X" include the options that "first X" is the same as "second X" and that "first X" is different from "second X", unless otherwise specified. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements. The term "or" refers to a non-exclusive "or" unless otherwise indicated (e.g., use of "or else" or "or in the alternative").

## Claims

1. Apparatus, comprising
means for receiving an orchestration request to provide a new orchestration policy for an instance of an application and a plurality of users, wherein the orchestration request indicates that each user of the plurality of users is connected to the instance of the application or is to be connected to the instance of the application, the orchestration request comprises for each of the users a location of the respective user, and each user of the plurality of users is served by a respective network of one or more networks;
means for collecting network related information from the one or more networks and collecting application related information from an owner of the application, wherein the network related information includes potential locations for deploying the instance of the application, and for each of the potential locations an indication of a quality of service available for the instance of the application at the respective potential location, and the application related information includes at least one of a quality of service requirement of the application to the users or a quality of service requirement of the application to the potential locations;
means for deriving the new orchestration policy based on the network related information and the application related information, wherein the new orchestration policy indicates one or more deployment locations among the potential locations such that a quality of service requirement of the application is sufficiently fulfilled for the plurality of users if the instance of the application is deployed at one of the one or more deployment locations;
means for providing the new orchestration policy in response to the orchestration request.

2. The apparatus according to claim 1, wherein the potential locations are edge cloud servers of the one or more networks.

3. The apparatus according to any of claims 1 and 2, wherein at least one of the one or more networks is a mobile network.

4. The apparatus according to any of claims 1 to 3, wherein the means for deriving is configured to derive the new orchestration policy such that, for each of the one or more deployment locations, the quality of service requirement of the application is fulfilled for each of the users if the instance of the application is deployed at the respective one of the one or more deployment locations.

5. The apparatus according to any of claims 1 to 4, wherein the new orchestration policy comprises, for at least one of the plurality of users, a quality of service requirement for a link between the respective user and the one or more deployment locations.

6. The apparatus according to claim 5, wherein the new orchestration policy comprises, for each of the users of the plurality of users, a quality of service requirement for a link between the respective user and the one or more deployment locations.

7. Apparatus, comprising
means for receiving a connection request to connect at least one user to an instance of an application, wherein, if the at least one user is connected to the instance of the application, a plurality of users are connected to the instance of the application, and each user of the plurality of users is served by a respective network of one or more networks;
means for providing an orchestration request for a new orchestration policy for the instance of the application and the plurality of users to an orchestration entity, wherein the orchestration request indicates that each user of the plurality of users is connected to the instance of the application or is to be connected to the instance of the application, the orchestration request comprises for each of the users a location of the respective user; and the orchestration request comprises a quality of service requirement of the application;
means for receiving the new orchestration policy from the orchestration entity in response to the orchestration request, wherein the new orchestration policy indicates one or more deployment locations to deploy the instance of the application such that the quality of service requirement of the application is sufficiently fulfilled for the plurality of users if the instance of the application is deployed at one of the one or more deployment locations;
means for deploying the instance of the application at one of the one or more deployment locations;
means for informing the at least one user or an application function of the network serving the at least one user how to access the instance of the application.

8. The apparatus according to claim 7, further comprising
means for comparing the new orchestration policy with a previous orchestration policy indicating a previous deployment location where the instance of the application is deployed before the at least one user was to be connected to the instance of the application;
means for informing an application function of one of the one or more networks how to access the instance of the application at the new deployment location if the new deployment location is different from the previous deployment location.

9. The apparatus according to any of claims 7 to 8, wherein the new deployment location is an edge cloud server of one of the one or more networks.

10. The apparatus according to any of claims 7 to 9, wherein at least one of the one or more networks is a mobile network.

11. The apparatus according to any of claims 7 to 10, further comprising
means for monitoring at least one of whether the application has changed or whether an information is received that at least one of the one or more networks has changed;
means for triggering the means for providing the orchestration request to provide the orchestration request if the at least one of that the application has changed or that the information is received that the at least one of the one or more networks has changed.

12. The apparatus according to any of claims 7 to 11, wherein the new orchestration policy comprises, for at least one user of the plurality of users, a quality of service requirement for a link between the respective user and the one or more deployment locations, and
the means for informing is configured to inform, for each of the users, an application function of the network serving the respective user about the quality of service requirement for the link between the respective user and the one or more deployment locations.
